# EUROPEAN PATENT APPLICATION

(11) **EP 4 778 883 A1**
(43) Date of publication of application: **22.07.2026**
(21) Application number: 25152473.2
(22) Date of filing: 17.01.2025
(51) Int. Cl.: C01B 3/04, C01B 3/52, C01B 3/56

(54) **CLEANING THE CRACKED GAS OF AN AMMONIA CRACKER**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Lutz, Michael, 60439 Frankfurt am Main (DE); Vicari, Lorenzo, 60439 Frankfurt am Main (DE); Duarte Tarazona, Annie, 75007 Paris (FR); Kunte, Aaryana, 60439 Frankfurt am Main (DE); Junger, Jasmin, 60439 Frankfurt am Main (DE)
(74) Representative: Air Liquide

(57) **Abstract**

Apparatus for producing hydrogen from a cracking reaction of ammonia, said apparatus comprising:
- a cracker unit (1) configured for producing a cracked gas from ammonia,
- an absorber (2) configured for removing unconverted ammonia from said cracked gas using an absorbent fluid, thereby producing an ammonia depleted gas containing hydrogen, nitrogen and vaporized absorbent fluid,
- an adsorption unit (3) comprising at least one adsorber vessel (4), said adsorber vessel or each adsorber vessel comprising a feed end arranged for receiving said ammonia depleted gas, a product end downstream said feed end for discharging a purified hydrogen product from said adsorber vessel, and an adsorbent bed arranged between said feed end and said product end, the adsorbent bed comprising an upstream layer (5) of an adsorbent selectively adsorbent for the vaporized absorbent fluid contained in said ammonia depleted gas and a downstream layer (6) of an adsorbent selectively adsorbent for nitrogen.

## Description

The present invention relates to an apparatus for producing hydrogen from ammonia and a method of producing hydrogen from ammonia.

In an effort to reduce the effects of carbon dioxide emissions, new energy carriers are becoming increasingly more important. One of the leading energy carriers is hydrogen; however, due to its small molecular size, high-pressure requirements, and very low boiling point, transportation of hydrogen is difficult and costly.

Ammonia (NH3) has raised some attention in the literature, since existing infrastructure can be used for storage and transportation (e.g., LPG infrastructure). As such, production of hydrogen using ammonia, instead of natural gas, is foreseen to be the future of the next generation of hydrogen production. Ammonia can be cracked into a cracked gas comprising hydrogen and nitrogen, at ambient pressure and moderate temperatures (at a range comprised between 450 and 600°C) by thermal cracking and/or in the presence of a catalyst. In order to save hydrogen compression energy on the backend, it can be advantageous to apply higher pressures for the ammonia cracking reaction (it is easier to compress ammonia gas compared to hydrogen gas due to hydrogen's small molecular size). However, at higher pressures, the cracking reaction is not favored according to Le Chatelier's principle, so higher temperatures are favored (around 700°C) in order to reach economic conversion rates.

The reaction of ammonia cracking thus results in relatively high amounts of unconverted ammonia in the cracked gas. In order to produce pure hydrogen, this unconverted ammonia needs to be removed in the purification process.

It has been proposed to treat the entire cracked gas mix directly after cooling into a pressure swing adsorption (PSA) unit. This has the disadvantage of exposing the adsorption unit to excessive amounts of unconverted ammonia in some events, such as startup, shutdown, upset or trip of the cracker unit, or even in the course of normal operation. Such severe conditions can lead to irreversibly damaging the PSA unit and reducing its operation capacity. Also, as a consequence of the unconverted ammonia content of the treated mix, the adsorption off gas comprises high amounts of unconverted ammonia and thus requires care when used back in the process.

An alternative approach was to have the cracked gas pre-treated in a wash column prior to sending it to the PSA unit. The high solubility of ammonia in water is well known, thus this classical approach enables to decrease the ammonia content of the cracked gas efficiently. This however may cause the cracked gas depleted in ammonia to be saturated in water, which is also detrimental to the PSA unit.

There is therefore a need for a solution to purify the cracked gas of an ammonia cracker addressing the above issues.

The invention proposes an apparatus for producing hydrogen from a cracking reaction of ammonia, said apparatus comprising :
- a cracker unit configured for producing a cracked gas from ammonia,
- an absorber configured for removing unconverted ammonia from said cracked gas using an absorbent fluid, thereby producing an ammonia depleted gas containing hydrogen, nitrogen and vaporized absorbent fluid,
- an adsorption unit comprising at least one adsorber vessel, said adsorber vessel or each adsorber vessel comprising a feed end arranged for receiving said ammonia depleted gas, a product end downstream said feed end for discharging a purified hydrogen product from said adsorber vessel, and an adsorbent bed arranged between said feed end and said product end, the adsorbent bed comprising an upstream layer of an adsorbent selectively adsorbent for the vaporized absorbent fluid contained in said ammonia depleted gas and a downstream layer of an adsorbent selectively adsorbent for nitrogen.

The absorber reduces the unconverted ammonia concentration in the ammonia depleted gas to a low enough value not to harm the adsorption unit, while the upstream layer arranged upstream the downstream layer allows to manage in the adsorption unit the absorbent fluid in the ammonia depleted gas.

In one embodiment, said absorber comprises a scrubbing unit, such as a wash column (for example a water wash column), configured for removing unconverted ammonia from said cracked gas using said absorbent fluid as a scrubbing medium, thus generating an overhead stream enriched in hydrogen and nitrogen as said ammonia depleted gas and a bottom liquid stream enriched in said unconverted ammonia.

In one embodiment, the apparatus comprises a regenerator configured for recovering unconverted ammonia from the bottom liquid stream and a regeneration conduit arranged for routing said bottom liquid stream from the scrubbing unit to the regenerator. Said regenerator is in particular a distillation or stripping column configured for recovering unconverted ammonia from the bottom liquid stream by generating a distillation or stripping liquid product purified from said unconverted ammonia and a distillation or stripping gas product enriched in unconverted ammonia.

In one embodiment, the apparatus comprises an absorbent fluid recycle conduit arranged to recycle to the scrubbing unit said stripping liquid product as at least part of said scrubbing medium.

In one embodiment, the apparatus comprises a pre-cracking reactor arranged for producing from ammonia a partly converted ammonia feed stream for the cracker unit.

In one embodiment, the apparatus comprises an ammonia recycle conduit arranged for recycling the recovered ammonia, in particular said distillation or stripping gas product, as feed to the cracker unit or to the pre-cracking reactor.

In one embodiment, the apparatus comprises a pump for pressurizing liquid ammonia.

In one embodiment, the apparatus comprises a vaporizer arranged for vaporizing liquid ammonia, in particular pressurized liquid ammonia from the pump, for producing a vaporized ammonia feed stream for the cracker unit or for the pre-cracking reactor.

In one embodiment, the cracker unit comprises a reaction section for performing a reaction of ammonia cracking and producing said cracked gas. The cracker unit comprises in particular a furnace arranged in thermal communication with the reaction section to provide heat to said reaction section. Said reaction section comprises in particular one or more catalyst-containing reactor tubes.

In one embodiment, the apparatus comprises an ammonia fuel conduit arranged for recycling the recovered ammonia, in particular said distillation or stripping gas product, as fuel to the furnace.

In one embodiment, the apparatus comprises an off gas recycle conduit to recycle an off gas produced by the adsorption unit as fuel to the furnace. The absorber advantageously allows to reduce the amount of unconverted ammonia sent to the adsorption unit and thus to the furnace via the off gas recycled as fuel. This allows to limit or eliminate NOx values in a flue gas from the furnace.

In one embodiment, the apparatus comprises at least one heat exchanger fluidically arranged between the cracker unit and the absorber for cooling the cracked gas. In particular, said heat exchanger or one of said at least one heat exchanger is arranged for cooling the cracked gas by heat exchange with an ammonia feed stream to the cracker unit or to the pre-cracking reactor. Said at least one heat exchanger comprises in particular said vaporizer.

The invention proposes also a process of producing hydrogen from a cracking reaction of ammonia, said process comprising :
- providing an ammonia feed stream,
- passing the provided ammonia feed stream, or a gas derived therefrom, to a cracker unit for producing a cracked gas comprising hydrogen, nitrogen and unconverted ammonia,
- passing the cracked gas to an absorber for removing unconverted ammonia from said cracked gas using an absorbent fluid, thereby producing an ammonia depleted gas comprising hydrogen, nitrogen and vaporized absorbent fluid,
- passing the ammonia depleted gas to an adsorption unit for producing a purified hydrogen product,
wherein said adsorption unit comprises at least one adsorber vessel, said adsorber vessel or each adsorber vessel comprising a feed end arranged for receiving said ammonia depleted gas, a product end downstream said feed end for discharging said purified hydrogen product from said adsorber vessel, and an adsorbent bed arranged between said feed end and said product end, the adsorbent bed comprising an upstream layer of an adsorbent selectively adsorbent for the vaporized absorbent fluid contained in said ammonia depleted gas and a downstream layer of an adsorbent selectively adsorbent for nitrogen.

In one embodiment, passing the cracked gas to an absorber comprises passing the cracked gas to a scrubbing unit removing unconverted ammonia from said cracked gas using said absorbent fluid as a scrubbing medium, thus generating an overhead stream enriched in hydrogen and nitrogen as said ammonia depleted gas and a bottom liquid stream enriched in said unconverted ammonia. Said scrubbing unit is for example a wash column.

In one embodiment, the process comprises recovering unconverted ammonia from said bottom liquid stream.

In one embodiment, the process comprises recycling the recovered unconverted ammonia as part of said provided ammonia stream and/or as fuel to the combustion.

In one embodiment, the step of recovering unconverted ammonia is performed by distillation or stripping of said bottom liquid stream, thus producing a distillation or stripping liquid product purified from said unconverted ammonia and, as said recovered unconverted ammonia, a distillation or stripping gas product enriched in unconverted ammonia. The process may comprise recycling said distillation or stripping liquid product to the scrubbing unit as at least part of said scrubbing medium.

Said absorbent fluid is typically water, for example demineralized water or a liquid recycled from said regenerator, such as said stripping liquid product.

In one embodiment, the step of providing an ammonia feed stream comprises pumping liquid ammonia.

In one embodiment, the step of providing an ammonia feed stream comprises vaporizing liquid ammonia, in particular said pumped liquid ammonia, for producing a vaporized ammonia feed stream.

In one embodiment, passing the provided ammonia feed stream, or a gas derived therefrom, to the cracker unit comprises performing a reaction of ammonia cracking, thus producing said cracked gas. Passing the provided ammonia feed stream, or a gas derived therefrom, to the cracker unit comprises for example passing the provided ammonia feed stream, or a gas derived therefrom, through one or more catalyst containing reactor tubes.

In one embodiment, the process comprises performing a combustion, for example in a furnace, to provide heat to said reaction of ammonia cracking.

In one embodiment, the adsorption unit produces said purified hydrogen product enriched in hydrogen and an off gas enriched in nitrogen. Said off gas comprises in particular nitrogen, hydrogen and potentially remaining amounts of unconverted ammonia.

In one embodiment, the process comprises recycling said off gas as fuel to the combustion.

In one embodiment, the absorber's operating conditions, such as absorption temperature and/or flow rate of absorbent fluid fed to the absorber, are controlled to adjust the amount of unconverted ammonia left in the ammonia depleted gas and thus to the adsorption unit. In particular, the absorber's operating conditions are controlled in function of an unconverted ammonia concentration measured in the ammonia depleted gas. This ensures a composition of the ammonia depleted gas compatible with the tolerance of the adsorption unit against ammonia.

In one embodiment, the process comprises cooling the cracked gas and the step of passing the cracked gas to an absorber comprises sending the thus cooled cracked gas to said absorber. Said step of cooling the cracked gas may comprise cooling the cracked gas by heat exchange with the ammonia feed stream, for example by performing said step of vaporizing said liquid ammonia.

In one embodiment, the process comprises performing a pre-cracking reaction of the provided ammonia feed stream, in particular a pre-cracking reaction of said vaporized ammonia feed stream, for producing a partly converted ammonia feed and passing said partly converted ammonia feed to the cracker unit for producing said cracked gas.

In one embodiment, the cracked gas comprises between 0,1 and 10 mol% of unconverted ammonia, preferably between 0,3 and 3 mol% of unconverted ammonia.

In one embodiment, the cracked gas comprises between 0 and 0,5 mol% of water, preferably between 0,1 and 0,4 mol% of water.

In one embodiment, the cracked gas comprises 75 mol% of hydrogen and 25 mol% of nitrogen.

In one embodiment, the cracked gas enters the absorber at a pressure between 15 and 60 bar.

In one embodiment, the cracked gas enters the absorber at a temperature between 10 and 100°C, preferably between 10 and 50°C.

In one embodiment, the ammonia depleted gas leaves the absorber at an absorber outlet temperature comprised between 10 and 100°C.

In one embodiment, said ammonia depleted gas is substantially saturated with the absorbent fluid at said absorber outlet temperature.

In one embodiment, the ammonia depleted gas comprises comprises 75 mol% of hydrogen and 25 mol% of nitrogen.

In one embodiment, the ammonia depleted gas comprises remaining amounts of unconverted ammonia, in particular between 1 and 100 ppmv of remaining amounts of unconverted ammonia, more particularly between 1 and 20 ppmv of remaining amounts of unconverted ammonia.

Said downstream layer is arranged in the adsorbent bed downstream of the upstream layer.

In one embodiment, said adsorbent selectively adsorbent for nitrogen is a zeolitic adsorbent.

In one embodiment, said adsorbent selectively adsorbent for vaporized absorbent fluid is a non-zeolitic adsorbent and said adsorbent selectively adsorbent for nitrogen is a zeolitic adsorbent. In particular, said adsorbent selectively adsorbent for vaporized absorbent fluid is alumina, in particular activated alumina. Said adsorbent selectively adsorbent for nitrogen is for example 5A zeolite.

In one embodiment, said adsorbent selectively adsorbent for vaporized absorbent fluid contained in said ammonia depleted gas is also selectively adsorbent for remaining amounts of unconverted ammonia in said ammonia depleted gas.

In one embodiment, the adsorbent bed comprises an intermediate layer of an intermediate adsorbent, said intermediate layer being arranged between the upstream layer and the downstream layer. Said intermediate adsorbent is for example activated carbon.

In one embodiment, the at least one adsorber vessel comprises at least two adsorber vessels.

In one embodiment, the adsorption unit is a pressure swing adsorption unit.

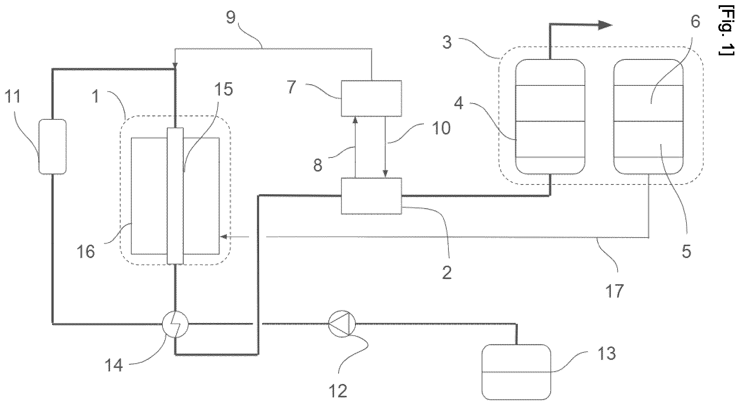

Figure 1 depicts an apparatus and process for the production of hydrogen from a cracking reaction of ammonia.

The apparatus comprises:
- a pre-cracking reactor 11 arranged for performing a pre-cracking reaction of ammonia and producing from ammonia a partly converted ammonia feed stream,
- a cracker unit 1 configured for performing a reaction of ammonia cracking and producing a cracked gas from the partly converted ammonia feed stream,
- a water wash column 2 configured for removing unconverted ammonia from the cracked gas using water as a scrubbing medium, thereby producing an ammonia depleted gas containing hydrogen, nitrogen and vaporized water,
- a pressure swing adsorption unit 3 comprising two adsorber vessels 4.

Each adsorber vessel 4 comprises a feed end arranged for receiving the ammonia depleted gas, a product end downstream the feed end for discharging a purified hydrogen product from the considered adsorber vessel 4 and an adsorbent bed arranged between the feed end and the product end, the adsorbent bed comprising an upstream layer 5 of activated alumina adsorbent selectively adsorbent for the vaporized water and remaining amounts of unconverted ammonia contained in the ammonia depleted gas and a downstream layer 6 of 5A zeolite adsorbent selectively adsorbent for nitrogen. With regard to the feed end, the product end downstream the feed end, the upstream layer and the downstream layer, "upstream" and "downstream" are defined with respect to the circulation of the gasses through an adsorber vessel when said adsorption vessel is undergoing an adsorption phase.

The apparatus is connected to a tank for storing and providing liquid ammonia 13 as a feedstock.

The apparatus comprises in addition:
- a stripping column 7 configured for recovering unconverted ammonia from the bottom liquid stream by generating a distillation or stripping liquid product purified from unconverted ammonia and a distillation or stripping gas product enriched in unconverted ammonia,
- a regeneration conduit 8 arranged for routing the bottom liquid stream from the scrubbing unit to the stripping column 7,
- an absorbent fluid recycle conduit 10 arranged to recycle to the water wash column 2 the stripping liquid product as at least part of the water scrubbing medium,
- an ammonia recycle conduit 9 arranged for recycling the stripping gas product as feed to the cracker unit 1.

With respect to the ammonia feed, the apparatus comprises a pump 12 for pressurizing liquid ammonia 13 from the tank, a heat exchanger 14 fluidically arranged between the cracker unit 1 and the water wash column 2 for cooling the cracked gas by heat exchange with an ammonia feed stream to the pre-cracking reactor 11. The heat exchanger comprises a vaporizer for vaporizing the pumped liquid ammonia, for producing a vaporized ammonia feed stream for the pre-cracking reactor 11.

The cracker unit 1 comprises a reaction section 15 for performing the reaction of ammonia cracking and producing the cracked gas and comprises a furnace 16 arranged in thermal communication with the reaction section 15 to provide heat to the reaction section 15. The reaction section 15 comprises one or more catalyst-containing reactor tubes. Only one tube is depicted on figure 1 for the sake of simplicity.

The apparatus comprises an off gas recycle conduit 17 to recycle an off gas produced by the pressure swing adsorption unit 3 as fuel to the furnace 16.

The process of producing hydrogen from a cracking reaction of ammonia comprises:
- pumping liquid ammonia 13,
- vaporizing the pumped liquid ammonia 13, for producing a vaporized ammonia feed stream,
- passing the vaporized ammonia feed stream to the pre-cracking reactor 11 for producing a partly converted ammonia feed stream derived from the vaporized ammonia feed stream,
- passing the partly converted ammonia feed stream to the cracker unit 1 for producing the cracked gas.

The cracked gas comprises for example about 75 mol% of hydrogen, about 25 mol% of nitrogen and between 0,3 and 3 mol% of unconverted ammonia. The cracked gas may comprise between 0,1 and 0,4 mol% of water.

The process further comprises:
- cooling the cracked gas by heat exchange performing the step of vaporizing the pumped liquid ammonia 13,
- sending the cooled cracked gas to the water wash column 2 for removing unconverted ammonia from the cracked gas using water as a scrubbing medium, thereby producing an ammonia depleted gas comprising hydrogen, nitrogen and vaporized water.

The cracked gas enters typically the water wash column 2 at a pressure between 15 and 60 bar and a temperature between 10 and 50°C. The water wash column 2 generates an overhead stream enriched in hydrogen and nitrogen as the ammonia depleted gas and a bottom liquid stream enriched in unconverted ammonia.

The process comprises recovering unconverted ammonia from the bottom liquid stream by distillation or stripping of the bottom liquid stream, thus producing a distillation or stripping liquid product purified from unconverted ammonia and a distillation or stripping gas product enriched in unconverted ammonia. The ammonia recycle conduit 9 enables recycling the stripping gas product as feed to the cracker unit 1. The absorbent fluid recycle conduit 10 enables recycling the distillation or stripping liquid product to water wash column 2 as at least part of the scrubbing medium.

The ammonia depleted gas comprises for example about 75 mol% of hydrogen, about 25 mol% of nitrogen and between 1 and 20 ppmv of remaining amounts of unconverted ammonia. The ammonia depleted gas leaves typically the wash column at an outlet temperature comprised between 10 and 100°C and is substantially saturated with water at the absorber outlet temperature. The water wash column 2 advantageously allows to reduce the amount of unconverted ammonia sent to the pressure swing adsorption unit 3 and thus to the furnace 16 via the off gas recycled as fuel. This allows to limit or eliminate NOx values in a flue gas from the furnace 16.

The absorption temperature and flow rate of absorbent fluid fed to the absorber may be controlled to adjust the amount of unconverted ammonia left in the ammonia depleted gas and thus to the pressure swing adsorption unit 3. The control is then preferably made in function of an unconverted ammonia concentration measured in the ammonia depleted gas to ensure a composition of the ammonia depleted gas compatible with the tolerance of the pressure swing adsorption unit 3 against ammonia.

The process comprises passing the ammonia depleted gas to the pressure swing adsorption unit 3 for producing a purified hydrogen product. The layer 5 of activated alumina adsorbent removes water from the ammonia depleted gas and acts as a protection for the downstream layer 6 of 5A zeolite adsorbent. The layer 6 of 5A zeolite adsorbent removes nitrogen from the gas depleted in water for producing the purified hydrogen product enriched in hydrogen. The pressure swing adsorption unit 3 produces an off gas enriched in nitrogen. The off gas comprises nitrogen, hydrogen and potentially remaining amounts of unconverted ammonia. The adsorbent bed is represented comprising two layers 5, 6 of adsorbent but may comprise an intermediate layer of activated carbon, the intermediate layer being arranged between the upstream layer 5 and the downstream layer 6.

The process comprises performing a combustion in the furnace 16 to provide heat to the reaction of ammonia cracking. The off gas recycle conduit 17 enables recycling the off gas as fuel to the furnace 16.

The invention is applicable to the production of hydrogen from ammonia.

## Claims

1. Apparatus for producing hydrogen from a cracking reaction of ammonia, said apparatus comprising:
- a cracker unit (1) configured for producing a cracked gas from ammonia,
- an absorber (2) configured for removing unconverted ammonia from said cracked gas using an absorbent fluid, thereby producing an ammonia depleted gas containing hydrogen, nitrogen and vaporized absorbent fluid,
- an adsorption unit (3) comprising at least one adsorber vessel (4), said adsorber vessel or each adsorber vessel comprising a feed end arranged for receiving said ammonia depleted gas, a product end downstream said feed end for discharging a purified hydrogen product from said adsorber vessel, and an adsorbent bed arranged between said feed end and said product end, the adsorbent bed comprising an upstream layer (5) of an adsorbent selectively adsorbent for the vaporized absorbent fluid contained in said ammonia depleted gas and a downstream layer (6) of an adsorbent selectively adsorbent for nitrogen.

2. Apparatus according to claim 1, wherein said absorber (2) comprises a scrubbing unit, such as a wash column, configured for removing unconverted ammonia from said cracked gas using said absorbent fluid as a scrubbing medium, thus generating an overhead stream enriched in hydrogen and nitrogen as said ammonia depleted gas and a bottom liquid stream enriched in said unconverted ammonia.

3. Apparatus according to claim 2, comprising a regenerator (7) configured for recovering unconverted ammonia from the bottom liquid stream and a regeneration conduit (8) arranged for routing said bottom liquid stream from the scrubbing unit to the regenerator (7).

4. Apparatus according to one of the previous claims, comprising a pre-cracking reactor (11) arranged for producing from ammonia a partly converted ammonia feed stream for the cracker unit (1).

5. Apparatus according to claim 3 or claim 4 dependent on claim 3, comprising an ammonia recycle conduit (9) arranged for recycling the recovered ammonia as feed to the cracker unit (1) or to the pre-cracking reactor (11).

6. Apparatus according to one of the previous claims, wherein the cracker unit (1) comprises:
- a reaction section (15) for performing a reaction of ammonia cracking and producing said cracked gas,
- a furnace (16) arranged in thermal communication with the reaction section (15) to provide heat to said reaction section (15).

7. Apparatus according to the previous claim, comprising an off gas recycle conduit (17) to recycle an off gas produced by the adsorption unit (3) as fuel to the furnace (16).

8. Apparatus according to one of the previous claims, wherein said adsorbent selectively adsorbent for the vaporized absorbent fluid is a non-zeolitic adsorbent and said adsorbent selectively adsorbent for nitrogen is a zeolitic adsorbent.

9. Apparatus according to one of the previous claims, wherein said adsorbent selectively adsorbent for the vaporized absorbent fluid is alumina.

10. Apparatus according to one of the previous claims, wherein said adsorbent selectively adsorbent for nitrogen is 5A zeolite.

11. Apparatus according to one of the previous claims, wherein the adsorption unit (3) is a pressure swing adsorption unit.

12. Process of producing hydrogen from a cracking reaction of ammonia, said process comprising:
- providing an ammonia feed stream,
- passing the provided ammonia feed stream, or a gas derived therefrom, to a cracker unit (1) for producing a cracked gas comprising hydrogen, nitrogen and unconverted ammonia,
- passing the cracked gas to an absorber (2) for removing unconverted ammonia from said cracked gas using an absorbent fluid, thereby producing an ammonia depleted gas comprising hydrogen, nitrogen and vaporized absorbent fluid,
- passing the ammonia depleted gas to an adsorption unit (3) for producing a purified hydrogen product,
wherein said adsorption unit (3) comprises at least one adsorber vessel (4), said adsorber vessel or each adsorber vessel (4) comprising a feed end arranged for receiving said ammonia depleted gas, a product end downstream said feed end for discharging said purified hydrogen product from said adsorber vessel (4), and an adsorbent bed arranged between said feed end and said product end, the adsorbent bed comprising an upstream layer (5) of an adsorbent selectively adsorbent for the vaporized absorbent fluid contained in said ammonia depleted gas and a downstream layer (6) of an adsorbent selectively adsorbent for nitrogen.

13. Process according to the previous claim, wherein the absorber's operating conditions are controlled to adjust the amount of unconverted ammonia left in the ammonia depleted gas and thus to the adsorption unit (3).

14. Process according to the previous claim, wherein the absorber's (2) operating conditions are controlled in function of an unconverted ammonia concentration measured in the ammonia depleted gas.

15. Process according to one of claims 12 to 14, wherein said ammonia depleted gas is substantially saturated with the absorbent fluid at said absorber outlet temperature.
